# FASCICULE DE BREVET EUROPEEN

(11) **EP 0 326 457 B1**
(45) Date de publication et mention de la délivrance du brevet: **20.04.1994**
(21) Numéro de dépôt: 89400126.2
(22) Date de dépôt: 17.01.1989
(51) Int. Cl.: B01D 53/34

(54) **Procédé et installation d'épuration d'effluents gazeux contenant de l'anhydride sulfureux et éventuellement des oxydes d'azote**
Verfahren und Anlage zur Reinigung von Schwefeloxyde und eventuell Stickoxyde enthaltenden Abgasen
Process and plant for purifying gaseous effluents containing oxides of sulphur and possebly of nitrogen

(30) Priorité: 18.01.1988 FR 8800487
(43) Date de publication de la demande: 02.08.1989
(73) Titulaire: BERTIN & CIE, F-78373 Plaisir Cédex (FR)
(72) Inventeur: Raymond, Bertrand, F-40440 Ondres (FR); Milande, Nicolas, F-40130 Capbreton (FR); Zuffi, Odile, F-64600 Anglet (FR); FRONTERE, Laurent, F-64100 BAYONNE (FR)
(74) Mandataire: Orès, Bernard

(56) Documents cités:
- EP-A- 0 186 925
- DE-A- 3 423 285
- Bergey's Manual of Systematic Bacteriology, Williams & Wilkins, Baltimore, USA, 1984

## Description

La présente invention est relative à un procédé et à une installation d'épuration d'effluents gazeux contenant de l'anhydride sulfureux et également à un procédé et à une installation d'épuration d'effluents gazeux contenant de l'anhydride sulfureux et des oxydes d'azote.

Le problème de l'épuration des effluents gazeux présente une très grande importance dans la lutte contre la pollution atmosphérique, car les gaz polluants que contiennent ces effluents gazeux d'une part représentent un gros danger pour la santé des êtres vivants et plus particulièrement des êtres humains, et pour l'environnement et, d'autre part, sont difficiles à éliminer. En effet, les techniques proposées dans l'Art antérieur n'apportent pas une solution globale satisfaisante car leur efficacité est insuffisante et la plupart d'entre elles n'aboutissent qu'à un transfert de pollution du milieu gazeux à un milieu liquide.

Le problème de l'épuration des effluents gazeux est d'autant plus difficile à résoudre lorsque ceux-ci contiennent plusieurs gaz polluants qui doivent être éliminés.

En particulier, l'épuration d'effluents gazeux contenant à la fois de l'anhydride sulfureux et des oxydes d'azote, constitue un problème particulièrement difficile à résoudre : l'anhydride sulfureux (SO₂) est un polluant gazeux très répandu dans les pays occidentaux et notamment européens ; il est émis principalement par toutes les installations brûlant des combustibles soufrés (fuel, charbon, ordures ménagères) ; il est à la source des "pluies acides". Le problème de l'épuration du SO₂ n'a pas trouvé de solution à ce jour, car la plupart des procédés proposés jusqu'à présent sont à la fois très coûteux en frais d'investissement et de fonctionnement et inefficaces en ce qu'ils ne font que transférer la pollution du milieu gazeux à un milieu liquide. Si aucune solution satisfaisante n'a été apportée à ce jour à l'épuration du SO₂ seul, l'élimination simultanée du SO₂ et des oxydes d'azote contenus dans les effluents gazeux à haute température, n'a, a fortiori, pu recevoir de solution.

La présente invention s'est donnée pour but de pourvoir à un procédé d'épuration d'effluents gazeux contenant à la fois du SO₂ et des oxydes d'azote, qui répond mieux aux nécessités de la pratique que les procédés proposés dans l'Art antérieur, notamment en ce qu'il n'entraine aucun transfert de pollution, en ce que les polluants sont transformés en produits valorisables et en ce que les coûts de mise en oeuvre sont sensiblement réduits par rapport à ceux des solutions proposées dans l'Art antérieur, d'une part en raison des conditions de mise en oeuvre à la pression atmosphérique et à des températures voisines de l'ambiante, et d'autre part en raison des faibles consommations de réactifs qu'il entraine.

La présente invention a pour objet un procédé d'épuration d'effluents gazeux contenant de l'anhydride sulfureux (SO₂), caractérisé en ce que lesdits effluents gazeux sont tout d'abord refroidis à une température de l'ordre de 30 à 60°C, puis le SO₂ contenu dans lesdits effluents, est mis en contact à cette température, à la pression atmosphérique, à un pH sensiblement neutre et en présence d'oxygène, avec une solution basique avec laquelle il forme du sulfate et du sulfite, qui sont soumis au cours de l'étape suivante du procédé, à l'action de bactéries sulfato-réductrices qui réduisent les sulfates et les sulfites en hydrogène sulfuré (H₂S) qui, extrait du milieu liquide, est soumis à un processus d'oxydation chimique pour produire du soufre solide qui est récupéré pour être valorisé industriellement.

La présente invention a également pour objet un procédé d'épuration d'effluents gazeux contenant de l'anhydride sulfureux (SO₂) et des oxydes d'azote (NOₓ) polluants, caractérisé en ce que lesdits effluents gazeux sont tout d'abord refroidis à une température de l'ordre de 30 à 60°C, puis le SO₂ et les NOₓ contenus dans lesdits effluents sont mis en contact à cette température, à la pression atmosphérique, à un pH sensiblement neutre et en présence d'oxygène, avec une solution basique avec laquelle ils forment respectivement du sulfate et du sulfite d'une part, et du nitrite et du nitrate d'autre part, qui sont soumis au cours de l'étape suivante du procédé, respectivement à l'action de bactéries sulfato-réductrices qui réduisent les sulfates et les sulfites en hydrogène sulfuré (H₂S) et de bactéries dénitrifiantes qui réduisent les nitrites et les nitrates en azote moléculaire libéré dans l'atmosphère sans créer de nuisances et/ou est valorisé industriellement, tandis que l'H₂S, extrait du milieu liquide, est soumis à un processus d'oxydation chimique pour produire du soufre solide qui est récupéré pour être valorisé industriellement.

Selon un mode de mise en oeuvre avantageux du procédé conforme à la présente invention, la solution basique avec laquelle le SO₂ et les NOₓ réagissent pour former des sulfates et des sulfites et des nitrites et des nitrates, est une solution d'ammoniaque.

Selon un autre mode de mise en oeuvre avantageux du procédé conforme à l'invention, les sulfates et les sulfites sont réduits en H₂S par fermentation en milieu aqueux en présence de bactéries sulfato-réductrices.

Selon encore un autre mode de mise en oeuvre avantageux du procédé conforme à l'invention, le nitrite et le nitrate sont réduits en azote moléculaire par fermentation en milieu aqueux en présence de bactéries dénitrifiantes.

Selon un autre mode de mise en oeuvre avantageux du procédé conforme à l'invention, l'H₂S est extrait du milieu liquide par strippage à l'air, tandis que le milieu liquide est recyclé dans l'étape d'oxydation du SO₂ et des NOₓ respectivement en sulfate et sulfite et en nitrite et nitrate.

Selon un autre mode de mise en oeuvre avantageux du procédé conforme à l'invention, l'H₂S, extrait par strippage à l'air, est oxydé en soufre solide par une solution aqueuse d'un agent favorisant l'oxydation appropriée, tel qu'un chélate ferrique.

La présente invention a également pour objet une installation d'épuration d'effluents gazeux contenant de l'anhydride sulfureux, caractérisée en ce qu'elle comprend en combinaison :
- une colonne d'absorption du SO₂ contenu dans lesdits effluents gazeux, pour transformer le SO₂ en sulfate et sulfite, par mise en contact avec une solution aqueuse d'une base appropriée, laquelle colonne comprend à sa partie inférieure, une tubulure d'introduction des effluents gazeux et une conduite de sortie des solutions de sulfate et de sulfite formés dans ladite colonne, laquelle conduite est connectée à un fermenteur, et à sa partie supérieure une tubulure d'entrée du milieu liquide d'absorption basique recyclé et une tubulure d'évacuation de l'effluent gazeux épuré hors de ladite colonne ;
- un fermenteur pour la transformation du sulfate et du sulfite formés dans la colonne d'absorption susdite, en H₂S par fermentation sulfato-réductrice, lequel fermenteur comprend à sa partie inférieure, la tubulure d'introduction des sulfates et sulfites, et à sa partie supérieure, une conduite de sortie de la solution aqueuse issue dudit fermenteur, connectée à une colonne de strippage à l'air et une conduite de sortie du gaz de fermentation connectée, par l'intermédiaire d'une tubulure, à une colonne d'oxydation ;
- une colonne d'extraction du H₂S par strippage à l'air, laquelle colonne comprend à sa partie supérieure une conduite d'entrée de la solution aqueuse issue du fermenteur et la tubulure de sortie de l'H₂S à l'état gazeux, reliée à une colonne de transformation de l'H₂S en S solide et à sa partie inférieure, la tubulure de recyclage, reliée à la colonne d'absorption du SO₂ ;
- une colonne de transformation de l'H₂S en S solide par oxydation en présence d'un chélate ferrique, laquelle colonne comporte à sa partie inférieure, une tubulure d'introduction de l'H₂S à l'état gazeux et une conduite de sortie du mélange de soufre solide en suspension dans le chélate, et à sa partie supérieure une conduite d'introduction du chélate ferrique et une conduite d'évacuation de l'effluent gazeux épuré ;
- un décanteur pour la séparation du S moléculaire solide à la sortie de la colonne de transformation de l'H₂S en S, lequel décanteur comprend à sa partie supérieure, une conduite en provenance de la colonne de transformation de l'H₂S en S solide et une conduite reliée à ladite colonne pour le recyclage du chélate ferrique du décanteur vers ladite colonne, et à sa partie inférieure une conduite d'évacuation du soufre ; et
- un échangeur de chaleur, propre à assurer le refroidissement des effluents gazeux jusqu'au voisinage de la température ambiante, préalablement à leur admission dans la colonne d'absorption, lequel échangeur est monté en amont de cette dernière.

La présente invention a également pour objet, en variante, une installation d'épuration d'effluents gazeux contenant de l'anhydride sulfureux et des oxydes d'azote, caractérisée en ce qu'elle comprend, dans ce cas, en combinaison :
- une colonne d'absorption du SO₂, et des oxydes d'azote, contenus dans lesdits effluents gazeux, pour transformer le SO₂ et les oxydes d'azote, respectivement en sulfate et sulfite d'une part et en nitrite et nitrate d'autre part, par mise en contact avec une solution aqueuse d'une base appropriée, laquelle colonne comprend à sa partie inférieure, une tubulure d'introduction des effluents gazeux et une conduite de sortie des solutions de sulfate et de sulfite et des solutions de nitrite et de nitrate formés dans ladite colonne, laquelle conduite de sortie est connectée au fermenteur correspondant, et à sa partie supérieure une tubulure d'entrée du milieu liquide d'absorption basique recyclé et une tubulure d'évacuation de l'effluent gazeux épuré hors de ladite colonne ;
- un fermenteur pour la transformation du sulfate et du sulfite formés dans la colonne d'absorption susdite, en H₂S par fermentation sulfato-réductrice, lequel fermenteur comprend à sa partie inférieure, la tubulure d'introduction des sulfates et sulfites, et à sa partie supérieure, une conduite de sortie de la solution aqueuse issue dudit fermenteur, connectée à une colonne de strippage à l'air et une conduite de sortie du gaz de fermentation connectée, par l'intermédiaire d'une tubulure, à une colonne d'oxydation ;
- une colonne d'extraction du H₂S par strippage à l'air, laquelle colonne comprend à sa partie supérieure la conduite d'entrée de la solution aqueuse issue du fermenteur et la tubulure de sortie de l'H₂S à l'état gazeux, reliée à la colonne et à sa partie inférieure, la tubulure de recyclage, reliée à la colonne d'absorption du SO₂ et des NOₓ ;
- une colonne de transformation de l'H₂S en S solide par oxydation en présence d'un chélate ferrique, laquelle colonne comporte à sa partie inférieure, une tubulure d'introduction de l'H₂S à l'état gazeux et une conduite de sortie du mélange de soufre solide en suspension dans le chélate, et à sa partie supérieure une conduite d'introduction du chélate ferrique et une conduite d'évacuation de l'effluent gazeux épuré ;
- un deuxième fermenteur pour la transformation du nitrite et du nitrate formés dans la colonne d'absorption susdite, en azote moléculaire, par fermentation en présence de bactéries dénitrifiantes, lequel fermenteur comprend à sa partie inférieure, la tubulure d'entrée des nitrates et nitrites et à sa partie supérieure, une conduite d'évacuation de l'azote moléculaire ;
- un décanteur pour la séparation du S moléculaire solide à la sortie de la colonne de transformation de l'H₂S en S, lequel décanteur comprend à sa partie supérieure, la conduite en provenance de la colonne susdite et une conduite reliée à la colonne susdite, pour le recyclage du chélate ferrique du décanteur vers ladite colonne, et à sa partie inférieure une conduite d'évacuation du soufre ; et
- un échangeur de chaleur, propre à assurer le refroidissement des effluents gazeux jusqu'au voisinage de la température ambiante, préalablement à leur admission dans la colonne d'absorption, lequel échangeur est monté en amont de cette dernière.

Selon un mode de réalisation avantageux des installations conformes à l'invention, le(s) fermenteur(s) est/sont un/des fermenteur(s) fonctionnant suivant le principe du lit fluidisé.

Selon un autre mode de réalisation avantageux desdites installations conformes à l'invention, la colonne de transformation du H₂S en S solide est un contacteur gaz/liquide du type comportant une pluralité de plaques planes percées d'une multitude de trous de très petit diamètre, inclinées suivant un angle de 45 à 60° par rapport à la verticale, et disposées superposées en chicanes sur toute la hauteur de ladite colonne.

Selon encore un autre mode de réalisation avantageux desdites installations conformes à l'invention, la colonne d'extraction du H₂S du milieu liquide par strippage par de l'air, comprend une pluralité de plaques planes percées d'une multitude de trous de très petit diamètre, inclinées suivant un angle de 45 à 60° par rapport à la verticale, et disposées superposées en chicanes sur toute la hauteur de ladite colonne.

Selon un autre mode de réalisation avantageux de l'installation conforme à l'invention, pour son application à l'épuration d'effluents gazeux contenant à la fois du SO₂ et des NOₓ, le fermenteur de réduction des oxydes d'azote et le fermenteur de réduction du SO₂ en H₂S sont montés en série avec boucles de recirculation de la solution dans chaque fermenteur, les sorties de gaz étant montées en parallèle.

Le procédé d'épuration d'effluents gazeux conforme à la présente invention comprend les étapes réactionnelles suivantes :
- 1ère étape:: **A**. Absorption du SO₂ dans une solution basique aqueuse, telle qu'une solution aqueuse d'ammoniaque, suivant la réaction (1) :

   2SO₂+4NH₃+2H₂O+¹/₂O₂ --> (NH₄)₂SO₄+(NH₄)₂SO₃ (1)
**B**. Absorption des NOₓ dans une solution basique aqueuse, telle qu'une solution aqueuse d'ammoniaque, suivant la réaction (2) :

   2NO₂+2NH₃+H₂O --> NH₄NO₂ + NH₄NO₃ (2)
- 2ème étape :: **A**. Biotransformation des sulfates et des sulfites formés conformément à la réaction (1) en H₂S, par des bactéries sulfato-réductrices.
**B**. Biotransformation des nitrites et des nitrates formés conformément à la réaction (2), en N moléculaire, par dénitrification par des bactéries dénitrifiantes appropriées.
- 3ème étape :: Transformation du H₂S extrait du milieu liquide par strippage par de l'air, en soufre solide, par oxydation en présence d'une solution aqueuse d'un chelate ferrique, suivant les réactions simultanées (3) et (4) :

H₂S+2Fe⁺⁺⁺ ----> 2Fe⁺⁺+2H⁺+S (solide) (3)

2R-SH+2Fe⁺⁺⁺ ----> 2Fe⁺⁺⁺2H⁺+R-S-S-R (liquide) (4)

avec régénération du chelate réduit en ion ferreux, en ion ferrique par l'oxygène, suivant la réaction (5) :

2Fe⁺⁺+1/₂ O₂ ----> 2Fe⁺⁺⁺+O⁻⁻

Ce processus de transformation du H₂S en S élémentaire solide fait l'objet de la Demande de Brevet Européen EP-A-0 325 522 déposée le 17 janvier 1989.

Le procédé conforme à la présente invention offre l'avantage d'une mise en oeuvre à la température ambiante, à la pression atmosphérique et à un pH proche de la neutralité. La consommation en produits chimiques est négligeable, tous les fluides ou produits étant recyclés, avec simple appoint si nécessaire.

De plus, il n'entraine aucun transfert de pollution, puisque les agents polluants (SO₂ et NOₓ) sont transformés en des produits non nocifs et/ou valorisables (S élémentaire solide et éventuellement azote moléculaire).

En outre, les installations à lit fluidisé (fermenteur) et à contacteur gaz-liquide à plateaux inclinés (colonne de transformation) sont très performantes.

Outre les dispositions qui précédent, l'invention comprend encore d'autres dispositions, qui ressortiront de la description qui va suivre.

L'invention sera mieux comprise à l'aide du complément de description qui va suivre, qui se réfère aux dessins annexés dans lesquels :
- la figure 1 représente le schéma d'une installation d'épuration d'effluents gazeux contenant à la fois du SO₂ et des NOₓ et,
- la figure 2 représente le schéma d'une installation d'épuration d'effluents gazeux ne contenant que du SO₂.

Il doit être bien entendu, toutefois, que ces dessins et les parties descriptives correspondantes, sont donnés uniquement à titre d'illustration de l'objet de l'invention, dont ils ne constituent en aucune manière une limitation.

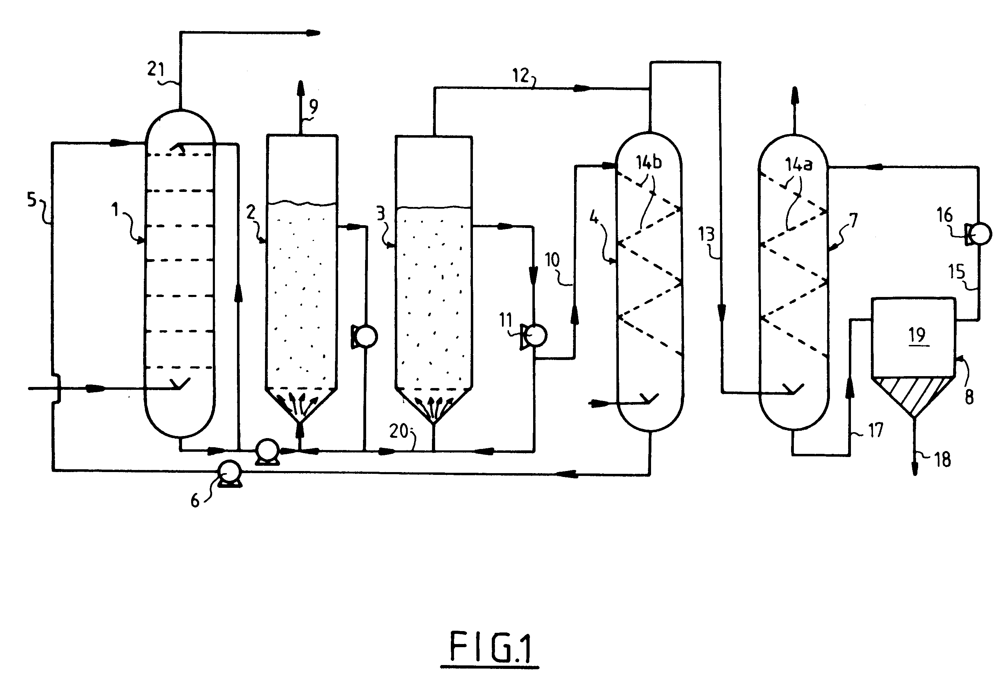

L'installation représentée à la figure 1 comprend :
une colonne 1 d'absorption du SO₂ et des NOₓ contenus dans l'effluent gazeux à épurer ;
un premier fermenteur, 3, fonctionnant selon le principe du lit fluidisé, pour la réduction des sulfates issus de la colonne 1, en hydrogène sulfuré, par des bactéries sulfato-réductrices ;
un deuxième fermenteur, 2, fonctionnant également selon le principe du lit fluidisé, assurant un contact intime solide/liquide, pour la dénitrification des nitrites et des nitrates issus de la colonne 1, en azote moléculaire.
une colonne 4 d'extraction du H₂S du milieu liquide, par strippage par de l'air, avec recyclage du milieu liquide dans la colonne 1, par une conduite 5, à l'aide d'une pompe 6 ;
une colonne 7 de transformation du H₂S provenant de la colonne 4 en S élémentaire solide , par oxydation ;
un décanteur 8 du soufre élémentaire solide formé dans la colonne 7.

La colonne 1 est remplie d'une solution aqueuse basique telle qu'une solution aqueuse d'ammoniaque, qui absorbe le SO₂ et les NOₓ pour former du sulfate et du sulfite d'ammonium et des nitrites et nitrates d'ammonium destinés à être envoyés respectivement dans le fermenteur 3 et le fermenteur 2 par la conduite 20, tandis que l'effluent gazeux épuré est évacué de la colonne 1 en 21.

Les fermenteurs 2 et 3 sont montés en série avec boucles de recirculation de la solution aqueuse contenant les sulfates, les sulfites et les nitrites et nitrates, dans le but de réaliser une réduction fermentaire complète de ceux-ci respectivement en H₂S et en azote moléculaire. Ce dernier est évacué en 9 du deuxième fermenteur 2, pour être libéré dans l'atmosphère sans créer de nuisances et/ou être valorisé industriellement, tandis que la solution aqueuse issue du premier fermenteur 3, est envoyée par la conduite 10, et la pompe 11, dans la colonne 4 de strippage par de l'air, qui récupère l'H₂S à l'état gazeux mélangé à l'air de strippage, pour l'envoyer dans la colonne 7 d'oxydation de l'H₂S à l'état gazeux, en soufre élémentaire solide, par contact intime avec un agent favorisant cette oxydation, avantageusement constitué par un chelate ferrique en solution aqueuse. Le mélange H₂S + air issu de la colonne de strippage 4, auquel est ajouté, par la conduite 12, du gaz de fermentation (H₂S) sortant du fermenteur 3, est introduit par la conduite 13, dans la colonne 7 d'oxydation. Les sorties de gaz (azote moléculaire et H₂S) des fermenteurs 2 et 3 sont montées en parallèle.

Ladite colonne d'oxydation 7 comprend avantageusement, de même que le colonne de strippage 4, une pluralité de plaques planes 14a, 14b, percées d'une multitude de trous de petit diamètre, inclinées suivant un angle de 45 à 60° sur la verticale, du type de la plaque qui fait l'objet du Brevet français FR-B-2 298 359 au nom de la Demanderesse, lesquelles plaques sont disposées superposées en chicanes sur toute la hauteur de la colonne 7 (ou 4).

La colonne 7 est alimentée en chelate ferrique par la conduite 15, et la pompe 16 ; le mélange de soufre solide en suspension dans le chelate, et/ou en combinaison avec celle-ci, issu de la colonne 7, pénètre dans le décanteur 8 par la conduite 17, d'où le soufre élémentaire solide est évacué en 18, tandis que la solution de chelate surnageante 19 est reprise par la conduite 15 pour être recyclée dans la colonne 7. Le procédé et l'installation de transformation de H₂S en soufre élémentaire solide sont décrits de façon plus spécifique dans la demande de Brevet EP-A-0 325 522 déposée le 17 janvier 1989.

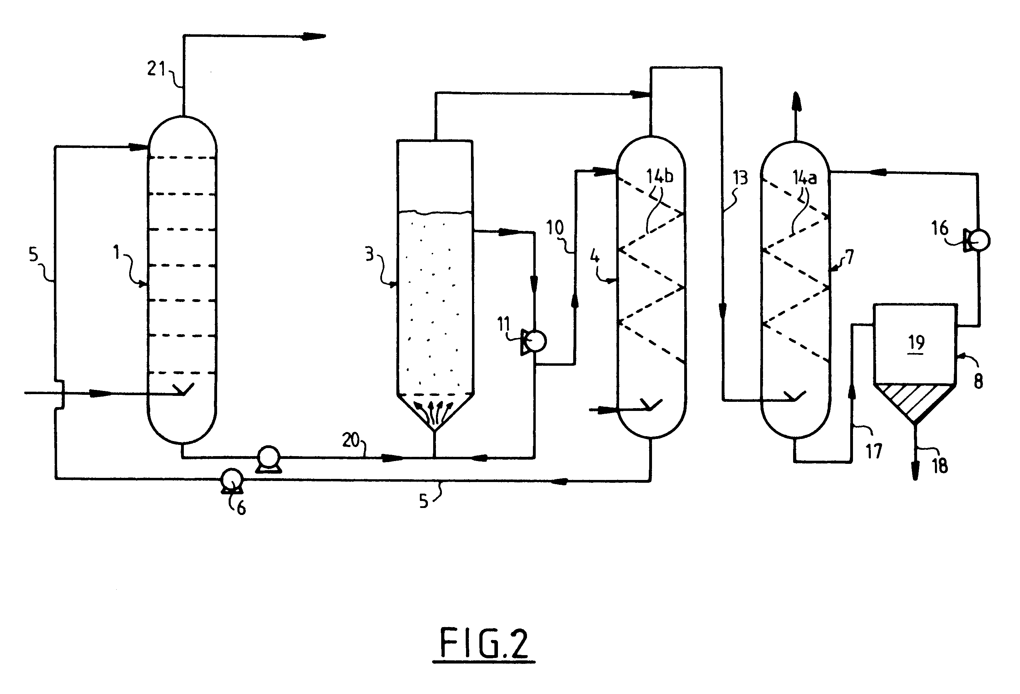

L'installation représentée schématiquement à la figure 2 se distingue de celle représentée à la figure 1 en ce qu'elle ne comporte pas de fermenteur 2 et en ce qu'elle est par conséquent destinée à traiter des effluents gazeux contenant du SO₂ mais dépourvus de NOₓ.

Les installations conformes à l'invention, du type de celles représentées aux dessins, comportent, en amont, un échangeur de chaleur qui met les effluents gazeux à une température aussi voisine que possible de l'ambiante.

Le procédé et l'installation d'épuration d'effluents gazeux contenant du SO₂ ou à la fois du SO₂ et des NOx, conformes à la présente invention, permettent de résoudre dans des conditions douces, puisque la température est l'ambiante ou aussi voisine que possible de l'ambiante, la pression atmosphérique et le pH sensiblement neutre, le problème de l'épuration du SO₂ sans que celui-ci représente un transfert de pollution comme c'est le cas dans l'Art antérieur et sans requérir des frais d'investissement et de fonctionnement aussi considérables que les procédés et installations de l'Art antérieur : les frais d'investissements sont en effet considérablement réduits, dans un rapport de 3 à 4,5 fois moins, et les frais de fonctionnement sont diminués dans une proportion de 2 à 3 fois moins.

L'efficacité du procédé conforme à la présente invention a été démontrée, à titre d'exemple, dans le cas d'une centrale thermique de puissance installée de 100 MW. L'installation conforme à l'invention permet de traiter 100 000 Nm³/h d'effluents gazeux contenant 0,2 % de SO₂ et 0,2 % de NOₓ. Le gaz épuré rejeté a une concentration en NOₓ et en SO₂ inférieure à 50 ppm.

## Revendications

1. Procédé d'épuration d'effluents gazeux contenant de l'anhydride sulfureux (SO₂), caractérisé en ce que lesdits effluents gazeux sont tout d'abord refroidis à une température de l'ordre de 30 à 60°C, puis le SO₂ contenu dans lesdits effluents, est mis en contact à cette température, à la pression atmosphérique, à un pH sensiblement neutre et en présence d'oxygène, avec une solution basique avec laquelle il forme du sulfate et du sulfite, qui sont soumis au cours de l'étape suivante du procédé, à l'action de bactéries sulfato-réductrices qui réduisent les sulfates et les sulfites en hydrogène sulfuré (H₂S) qui, extrait du milieu liquide, est soumis à un processus d'oxydation chimique pour produire du soufre solide qui est récupéré pour être valorisé industriellement.

2. Procédé d'épuration d'effluents gazeux contenant de l'anhydride sulfureux (SO₂) et des oxydes d'azote (NOₓ) polluants, caractérisé en ce que lesdits effluents gazeux sont tout d'abord refroidis à une température de l'ordre de 30 à 60°C, puis Te SO₂ et les NOₓ contenus dans lesdits effluents sont mis en contact à cette température, à la pression atmosphérique, à un pH sensiblement neutre et en présence d'oxygène, avec une solution basique avec laquelle ils forment respectivement du sulfate et du sulfite d'une part, et du nitrite et du nitrate d'autre part, qui sont soumis au cours de l'étape suivante du procédé, respectivement à l'action de bactéries sulfato-réductrices qui réduisent les sulfates et les sulfites en hydrogène sulfuré (H₂S) et de bactéries dénitrifiantes qui réduisent les nitrites et les nitrates en azote moléculaire libéré dans l'atmosphère sans créer de nuisances et/ou est valorisé industriellement, tandis que l'H₂S, extrait du milieu liquide, est soumis à un processus d'oxydation chimique pour produire du soufre solide qui est récupéré pour être valorisé industriellement.

3. Procédé selon la revendication 1 ou la revendication 2, caractérisé en ce que la solution basique avec laquelle le SO₂ et les NOₓ réagissent pour former des sulfates et des sulfites et des nitrites et des nitrates, est une solution d'ammoniaque.

4. Procédé selon l'une quelconque des revendications 1 à 3, caractérisé en ce que les sulfates et les sulfites sont réduits en H₂S par fermentation en milieu aqueux en présence de bactéries sulfato-réductrices.

5. Procédé selon l'une quelconque des revendications 2 et 3, caractérisé en ce que le nitrite et le nitrate sont réduits en azote moléculaire par fermentation en milieu aqueux en présence de bactéries dénitrifiantes.

6. Procédé selon l'une quelconque des revendications 1 à 5, caractérisé en ce que l'H₂S est extrait du milieu liquide par strippage à l'air, tandis que le milieu liquide est recyclé dans l'étape d'oxydation du SO₂ et des NOₓ respectivement en sulfate et sulfite et en nitrite et nitrate.

7. Procédé selon l'une quelconque des revendications 1 à 6, caractérisé en ce que l'H₂S, extrait par strippage à l'air, est oxydé en soufre solide par une solution aqueuse d'un agent favorisant l'oxydation appropriée, tel qu'un chélate ferrique.

8. Installation d'épuration d'effluents gazeux contenant de l'anhydride sulfureux, caractérisée en ce qu'elle comprend en combinaison :
- une colonne (1) d'absorption du SO₂ contenu dans lesdits effluents gazeux, pour transformer le SO₂ en sulfate et sulfite, par mise en contact avec une solution aqueuse d'une base appropriée, laquelle colonne (1) comprend à sa partie inférieure, une tubulure d'introduction des effluents gazeux et une conduite de sortie (20) des solutions de sulfate et de sulfite formés dans ladite colonne, laquelle conduite (20) est connectée à un fermenteur (3), et à sa partie supérieure une tubulure d'entrée (5) du milieu liquide d'absorption basique recyclé et une tubulure (21) d'évacuation de l'effluent gazeux épuré hors de ladite colonne (1);
- un fermenteur (3) pour la transformation du sulfate et du sulfite formés dans la colonne d'absorption susdite (1), en H₂S par fermentation sulfato-réductrice, lequel fermenteur comprend à sa partie inférieure, la tubulure d'introduction (20) des sulfates et sulfites, et à sa partie supérieure, une conduite (10) de sortie de la solution aqueuse issue dudit fermenteur (3), connectée à une colonne (4) de strippage à l'air et une conduite (12) de sortie du gaz de fermentation connectée, par l'intermédiaire d'une tubulure (13), à une colonne (7) d'oxydation ;
- une colonne (4) d'extraction du H₂S par strippage à l'air, laquelle colonne comprend à sa partie supérieure la conduite d'entrée (10) de la solution aqueuse issue du fermenteur (3) et la tubulure (13) de sortie de l'H₂S à l'état gazeux, reliée à la colonne (7) et à sa partie inférieure, la tubulure (5) de recyclage, reliée à la colonne (1) ;
- une colonne (7) de transformation de l'H₂S en S solide par oxydation en présence d'un chélate ferrique, laquelle colonne (7) comporte à sa partie inférieure, une tubulure d'introduction (13) de l'H₂S à l'état gazeux et une conduite 17 de sortie du mélange de soufre solide en suspension dans le chélate, et à sa partie supérieure une conduite d'introduction (15) du chélate ferrique et une conduite d'évacuation de l'effluent gazeux épuré ;
- un décanteur (8) pour la séparation du S moléculaire solide à la sortie de la colonne (7) de transformation de l'H₂S en S, lequel décanteur comprend à sa partie supérieure, la conduite (17) en provenance de la colonne (7) et une conduite (15) reliée à la colonne (7) pour le recyclage du chélate ferrique du décanteur vers ladite colonne (7), et à sa partie inférieure une conduite d'évacuation du soufre (18) ; et
- un échangeur de chaleur (22), propre à assurer le refroidissement des effluents gazeux jusqu'au voisinage de la température ambiante, préalablement à leur admission dans la colonne d'absorption (1), lequel échangeur est monté en amont de cette dernière.

9. Installation d'épuration d'effluents gazeux contenant de l'anhydride sulfureux et des oxydes d'azote, caractérisée en ce qu'elle comprend en combinaison :
- une colonne (1) d'absorption du SO₂, et des oxydes d'azote, contenus dans lesdits effluents gazeux, pour transformer le SO₂ et les oxydes d'azote, respectivement en sulfate et sulfite d'une part et en nitrite et nitrate d'autre part, par mise en contact avec une solution aqueuse d'une base appropriée, laquelle colonne (1) comprend à sa partie inférieure, une tubulure d'introduction des effluents gazeux et une conduite de sortie (20) des solutions de sulfate et de sulfite et des solutions de nitrite et de nitrate formés dans ladite colonne, laquelle conduite (20) est connectée au fermenteur correspondant (2, 3), et à sa partie supérieure une tubulure d'entrée (5) du milieu liquide d'absorption basique recyclé et une tubulure (21) d'évacuation de l'effluent gazeux épuré hors de ladite colonne (1) ;
- un fermenteur (3) pour la transformation du sulfate et du sulfite formés dans la colonne d'absorption susdite (1), en H₂S par fermentation sulfato-réductrice, lequel fermenteur comprend à sa partie inférieure, la tubulure d'introduction (20) des sulfates et sulfites, et à sa partie supérieure, une conduite (10) de sortie de la solution aqueuse issue dudit fermenteur (3), connectée à une colonne (4) de strippage à l'air et une conduite (12) de sortie du gaz de fermentation connectée, par l'intermédiaire d'une tubulure (13), à une colonne (7) d'oxydation ;
- une colonne (4) d'extraction du H₂S par strippage à l'air, laquelle colonne comprend à sa partie supérieure la conduite d'entrée (10) de la solution aqueuse issue du fermenteur (3) et Ta tubulure (13) de sortie de l'H₂S à l'état gazeux, reliée à la colonne (7) et à sa partie inférieure, la tubulure (5) de recyclage, reliée à la colonne (1) ;
- une colonne (7) de transformation de l'H₂S en S solide par oxydation en présence d'un chélate ferrique, laquelle colonne (7) comporte à sa partie inférieure, une tubulure d'introduction (13) de l'H₂S à l'état gazeux et une conduite 17 de sortie du mélange de soufre solide en suspension dans le chélate, et à sa partie supérieure une conduite d'introduction (15) du chélate ferrique et une conduite d'évacuation de l'effluent gazeux épuré ;
- un deuxième fermenteur (2) pour la transformation du nitrite et du nitrate formés dans la colonne d'absorption (1) susdite, en azote moléculaire, par fermentation en présence de bactéries dénitrifiantes, lequel fermenteur comprend à sa partie inférieure, la tubulure d'entrée (20) des nitrates et nitrites et à sa partie supérieure, une conduite d'évacuation (9) de l'azote moléculaire ;
- un décanteur (8) pour la séparation du S moléculaire solide à la sortie de la colonne (7) de transformation de l'H₂S en S, lequel décanteur comprend à sa partie supérieure, la conduite (17) en provenance de la colonne (7) et une conduite (15) reliée à la colonne (7) pour le recyclage du chélate ferrique du décanteur vers ladite colonne (7), et à sa partie inférieure une conduite d'évacuation du soufre (18) ; et
- un échangeur de chaleur (22), propre à assurer le refroidissement des effluents gazeux jusqu'au voisinage de la température ambiante, préalablement à leur admission dans la colonne d'absorption (1), lequel échangeur est monté en amont de cette dernière.

10. Installation selon la revendication 8 ou la revendication 9, caractérisée en ce que le(s) fermenteur(s) est/sont un/des fermenteur(s) fonctionnant suivant le principe du lit fluidisé.

11. Installation selon l'une quelconque des revendications 8 à 10, caractérisée en ce que la colonne (7) de transformation du H₂S en S solide est un contacteur gaz/liquide du type comportant une pluralité de plaques (14a) planes percées d'une multitude de trous de très petit diamètre, inclinées suivant un angle de 45 à 60° par rapport à la verticale, et disposées superposées en chicanes sur toute la hauteur de ladite colonne.

12. Installation selon l'une quelconque des revendications 8 à 11, caractérisée en ce que la colonne (4) d'extraction du H₂S du milieu liquide par strippage par de l'air, comprend une pluralité de plaques (14b) planes percées d'une multitude de trous de très petit diamètre, inclinées suivant un angle de 45 à 60° par rapport à la verticale, et disposées superposées en chicanes sur toute la hauteur de ladite colonne.

13. Installation selon l'une quelconque des revendications 9 à 12, pour son application à l'épuration d'effluents gazeux contenant à la fois du SO₂ et des NOₓ, caractérisée en ce que le fermenteur (2) de réduction des oxydes d'azote et le fermenteur (3) de réduction du SO₂ en H₂S sont montés en série avec boucles de recirculation (20) de la solution dans chaque fermenteur (2,3), les sorties de gaz (9,12) étant montées en parallèle.

## Claims

1. Process for the purification of gaseous effluents containing sulphur dioxide (SO₂), characterized in that the said gaseous effluents are first of all cooled to a temperature of the order of 30 to 60°C and the SO₂ contained in the said effluents is then brought into contact at this temperature, at atmospheric pressure, at a substantially neutral pH and in the presence of oxygen, with a basic solution with which it forms sulphate and sulphite, which are subjected during the following stage of the process to the action of sulphate-reducing bacteria which reduce the sulphates and the sulphites to hydrogen sulphide (H₂S) which, once extracted from the liquid medium, is subjected to a chemical oxidation process in order to produce solid sulphur which is recovered in order to be enhanced in value industrially.

2. Process for the purification of gaseous effluents containing contaminating nitrogen oxides (NOₓ) and sulphur dioxide (SO₂), characterized in that the said gaseous effluents are first of all cooled to a temperature of the order of 30 to 60°C and the SO₂ and the NOₓ contained in the said effluents are then brought into contact at this temperature, at atmospheric pressure, at a substantially neutral pH and in the presence of oxygen, with a basic solution with which they form respectively sulphate and sulphite, on the one hand, and nitrite and nitrate, on the other hand, which are subjected during the following stage of the process respectively to the action of sulphate-reducing bacteria, which reduce the sulphates and the sulphites to hydrogen sulphide (H₂S), and of denitrifying bacteria which reduce the nitrites and the nitrates to molecular nitrogen which is freed into the atmosphere without causing harm and/or is enhanced in value industrially, whereas the H₂S, extracted from the liquid medium, is subjected to a chemical oxidation process in order to produce solid sulphur which is recovered in order to be enhanced in value industrially.

3. Process according to Claim 1 or Claim 2, characterized in that the basic solution with which the SO₂ and the NOₓ react to form sulphates and sulphites and nitrites and nitrates is an aqueous ammonia solution.

4. Process according to any one of Claims 1 to 3, characterized in that the sulphates and the sulphites are reduced to H₂S by fermentation in aqueous medium in the presence of sulphate-reducing bacteria.

5. Process according to either of Claims 2 and 3, characterized in that the nitrites and the nitrates are reduced to molecular nitrogen by fermentation in aqueous medium in the presence of denitrifying bacteria.

6. Process according to any one of Claims 1 to 5, characterized in that the H₂S is extracted from the liquid medium by stripping with air, whereas the liquid medium is recycled in the oxidation stage of the SO₂ and the NOₓ to sulphate and sulphite and to nitrite and nitrate respectively.

7. Process according to any one of Claims 1 to 6, characterized in that the H₂S, extracted by stripping with air, is oxidized to solid sulphur by an aqueous solution of an agent which promotes suitable oxidation, such as a ferric chelate.

8. Plant for the purification of gaseous effluents containing sulphur dioxide, characterized in that it comprises, in combination:
- a column (1) for the absorption of the SO₂ contained in the said gaseous effluents, in order to convert the SO₂ to sulphate and sulphite by bringing it into contact with an aqueous solution of a suitable base, which column (1) comprises, in its lower part, a pipe for introduction of the gaseous effluents and an outlet pipe (20) for the sulphate and sulphite solutions formed in the said column, which pipe (20) is connected to a fermenter (3), and, in its upper part, an inlet pipe (5) for the recycled basic liquid absorption medium and a pipe (21) for discharge of the purified gaseous effluent away from the said column (1);
- a fermenter (3) for the conversion of the sulphate and the sulphite formed in the abovementioned absorption column (1) to H₂S by sulphate-reducing fermentation, which fermenter comprises, in its lower part, the pipe (20) for introduction of the sulphates and sulphites and, in its upper part, an outlet pipe (10) for the aqueous solution resulting from the said fermenter (3), which outlet pipe is connected to a column (4) for stripping with air, and an outlet pipe (12) for the fermentation gas, which outlet pipe is connected, via a pipe (13), to an oxidation column (7);
- a column (4) for extraction of the H₂S by stripping with air, which column comprises, in its upper part, the inlet pipe (10) for the aqueous solution resulting from the fermenter (3) and the outlet pipe (13) for the H₂S in the gaseous state, which outlet pipe is connected to the column (7), and, in its lower part, the recycling pipe (5), which is connected to the column (1);
- a column (7) for conversion of the H₂S to solid S by oxidation in the presence of a ferric chelate, which column (7) contains, in its lower part, a pipe (13) for introduction of the H₂S in the gaseous state and an outlet pipe (17) for the mixture of solid sulphur in suspension in the chelate and, in its upper part, a pipe (15) for introduction of the ferric chelate and a pipe for discharge of the purified gaseous effluent;
- a settling tank (8) for the separation of the solid molecular S at the outlet of the column (7) for conversion of the H₂S to S, which settling tank comprises, in its upper part, the pipe (17) originating from the column (7) and a pipe (15), which is connected to the column (7), for recycling the ferric chelate from the settling tank to the said column (7) and, in its lower part, a pipe (18) for discharge of the sulphur; and
- a heat exchanger (22) capable of ensuring cooling of the gaseous effluents to around ambient temperature, prior to their admission into the absorption column (1), which exchanger is mounted upstream of the latter.

9. Plant for purification of gaseous effluents containing sulphur dioxide and nitrogen oxides, characterized in that it comprises, in combination:
- a column (1) for absorption of the SO₂ and the nitrogen oxides contained in the said gaseous effluents, in order to convert the SO₂ and the nitrogen oxides respectively to sulphate and sulphite, on the one hand, and to nitrite and nitrate, on the other hand, by bringing them into contact with an aqueous solution of a suitable base, which column (1) comprises, in its lower part, a pipe for introduction of the gaseous effluents and an outlet pipe (20) for the sulphate and sulphite solutions and nitrite and nitrate solutions formed in the said column, which pipe (20) is connected to the corresponding fermenter (2, 3), and, in its upper part, an inlet pipe (5) for the recycled basic liquid absorption medium and a pipe (21) for discharge of the purified gaseous effluent away from the said column (1);
- a fermenter (3) for the conversion of the sulphate and the sulphite formed in the abovementioned absorption column (1) to H₂S by sulphate-reducing fermentation, which fermenter comprises, in its lower part, the pipe (20) for introduction of the sulphates and sulphites and, in its upper part, an outlet pipe (10) for the aqueous solution resulting from the said fermenter (3), which outlet pipe is connected to a column (4) for stripping with air, and an outlet pipe (12) for the fermentation gas, which outlet pipe is connected, via a pipe (13), to an oxidation column (7);
- a column (4) for extraction of the H₂S by stripping with air, which column comprises, in its upper part, the inlet pipe (10) for the aqueous solution resulting from the fermenter (3) and the outlet pipe (13) for the H₂S in the gaseous state, which outlet pipe is connected to the column (7), and, in its lower part, the recycling pipe (5), which is connected to the column (1);
- a column (7) for conversion of the H₂S to solid S by oxidation in the presence of a ferric chelate, which column (7) contains, in its lower part, a pipe (13) for introduction of the H₂S in the gaseous state and an outlet pipe (17) for the mixture of solid sulphur in suspension in the chelate and, in its upper part, a pipe (15) for introduction of the ferric chelate and a pipe for discharge of the purified gaseous effluent;
- a second fermenter (2) for the conversion of the nitrite and the nitrate formed in the abovementioned absorption column (1) to molecular nitrogen by fermentation in the presence of denitrifying bacteria, which fermenter comprises, in its lower part, the inlet pipe (20) for the nitrates and nitrites and, in its upper part, a pipe (9) for discharge of the molecular nitrogen;
- a settling tank (8) for the separation of the solid molecular S at the outlet of the column (7) for conversion of the H₂S to S, which settling tank comprises, in its upper part, the pipe (17) originating from the column (7) and a pipe (15), which is connected to the column (7), for recycling the ferric chelate from the settling tank to the said column (7) and, in its lower part, a pipe (18) for discharge of the sulphur; and
- a heat exchanger (22) capable of ensuring cooling of the gaseous effluents to around ambient temperature, prior to their admission into the absorption column (1), which exchanger is mounted upstream of the latter.

10. Plant according to Claim 8 or Claim 9, characterized in that the fermenter(s) is/are a fermenter or fermenters operating according to the fluidized-bed principle.

11. Plant according to any one of Claims 8 to 10, characterized in that the column (7) for conversion of the H₂S to solid S is a gas/liquid contacter of the type comprising a plurality of flat plates (14a) pierced with a multiplicity of holes of very small diameter, inclined along an angle of 45 to 60° with respect to the vertical and arranged superimposed as baffles throughout the height of the said column.

12. Plant according to any one of Claims 8 to 11, characterized in that the column (4) for extraction of the H₂S from the liquid medium by stripping with air comprises a plurality of flat plates (14b) pierced with a multiplicity of holes of very small diameter, inclined along an angle of 45 to 60° with respect to the vertical and arranged superimposed as baffles throughout the height of the said column.

13. Plant according to any one Of Claims 9 to 12 for its application to the purification of gaseous effluents containing both SO₂ and NOₓ, characterized in that the fermenter (2) for reduction of the nitrogen oxides and the fermenter (3) for reduction of the SO₂ to H₂S are connected in series with recirculation loops (20) for the solution in each fermenter (2, 3), the gas outlets (9, 12) being connected in parallel.

## Patentansprüche

1. Verfahren zur Reinigung von Schwefeldioxid (SO₂) enthaltenden Abgasen, **dadurch gekennzeichnet, daß** diese Abgase bereits auf eine Temperatur im Bereich von 30 bis 60 °C abgekühlt sind, wonach das in den Abgasen enthaltene SO₂ bei dieser Temperatur, unter Atmosphärendruck bei einem im wesentlichen neutralen pH-Wert und bei Anwesenheit von Sauerstoff einer basischen Lösung zugeführt wird, mittels welcher Sulfat und Sulfit gebildet werden, die im nachfolgenden Verfahrensschritt sulfatreduzierenden Bakterien ausgesetzt sind, welche die Sulfate und Sulfite zu Schwefelwasserstoff (H₂S) reduzieren, der aus dem flüssigen Zustand extrahiert und einem chemischen Oxydationsprozeß unterworfen wird, um festen Schwefel zu erzeugen, der zur industriellen Nutzung zurückgewonnen wird.

2. Verfahren zur Reinigung von Schwefeldioxid (SO₂) und Stickoxidverunreinigungen (NOₓ) enthaltenden Abgasen, **dadurch gekennzeichnet, daß** diese Abgase bereits auf eine Temperatur im Bereich von 30 bis 60 °C abgekühlt sind, wonach das in den Abgasen enthaltene SO₂ und NOₓ bei dieser Temperatur, unter Atmosphärendruck, bei im wesentlichen neutralem pH-Wert und bei Anwesenheit von Sauerstoff einer basischen Lösung zugeführt werden, mittels welcher einerseits Sulfat und Sulfit bzw. andererseits Nitrit und Nitrat gebildet werden, die im nachfolgenden Verfahrensschritt sulfatreduzierenden Bakterien, welche die Sulfate und Sulfite zu Schwefelwasserstoff (H₂S) reduzieren, bzw. Denitrifikationsbakterien ausgesetzt sind, welche die Nitrite und Nitrate zu molekularem freien Stickstoff reduzieren, der ohne eine Belastung zu verursachen in der Atmosphäre freigesetzt und/oder industriell genutzt wird, wogegen der aus dem flüssigen Zustand extrahierte H₂S einem chemischen Oxydationsprozeß unterworfen wird, um festen Schwefel zu erzeugen, der zur industriellen Nutzung zurückgewonnen wird.

3. Verfahren nach Anspruch 1 oder 2, **dadurch gekennzeichnet, daß** die basische Lösung, mit welcher das SO₂ und die NOₓ reagieren, um Sulfate und Sulfite bzw. Nitrite und Nitrate zu bilden, eine Amoniaklösung ist.

4. Verfahren nach einem der Ansprüche 1 bis 3, **dadurch gekennzeichnet, daß** die Sulfate und Sulfite durch Fermentierung in wäßriger Lösung unter Anwesenheit von sulfatreduzierenden Bakterien zu H₂S reduziert werden.

5. Verfahren nach einem der Ansprüche 2 oder 3, **dadurch gekennzeichnet, daß** das Nitrit und das Nitrat durch Fermentierung in wäßriger Lösung unter Anwesenheit von Denitrifikationsbakterien zu Stickstoff reduziert werden.

6. Verfahren nach einem der Ansprüche 1 bis 5, **dadurch gekennzeichnet, daß** das H₂S aus dem flüssigen Zustand durch Strippen in Luft extrahiert wird, wogegen das flüssige Medium bei dem Oxydationsschritt von SO₂ und NOₓ in Sulfat und Sulfit bzw. Nitrat und Nitrit zurückgewonnen wird.

7. Verfahren nach einem der Ansprüche 1 bis 6, **dadurch gekennzeichnet, daß** durch Strippen in Luft extrahierte H₂S mittels einer wäßrigen Lösung eines die geeignete Oxidation fördernden Agens, wie Eisen-Chelat, zu festem Schwefel oxydiert wird

8. Einrichtung zur Reinigung von Schwefeldioxid enthaltenden Abgasen, **dadurch gekennzeichnet, daß** sie folgende Kombination enthält:
- eine Säule (1) zur Absorption des in den Abgasen enthaltenen SO₂, um das SO₂ durch Einbringen in eine wäßrige Lösung mit geeigneter Basizität in Sulfat und Sulfit umzuwandeln, wobei diese Säule (1) an ihrem unteren Teil einen Stutzen zur Einbringung der Abgase und eine an eine Fermentiereinrichtung (3) angeschlossene Leitung (20) zum Ableiten der in dieser Säule gebildeten Sulfat- und Sulfitlösungen und an ihrem oberen Teil einen Stutzen (5) zum Einbringen des zurückgewonnenen flüssigen Mediums zur basischen Absorption und einen Stutzen (21) zur Evakuierung des gereinigten Abgases aus dieser Säule (1) aufweist;
- eine Fermentiereinrichtung (3) zur Umwandlung des in der genannten Absorptionssäule (1) gebildeten Sulfats und Sulfits mittels sulfatreduzierender Fermentierung zu H₂S, wobei diese Fermentiereinrichtung an ihrem unteren Teil den Stutzen (20) zum Einbringen von Sulfaten und Sulfiten und an ihrem oberen Teil eine Leitung (10) zum Ableiten der von dieser Fermentiereinrichtung abfließenden wäßrigen Lösung aufweist, die mit einer Säule (4) zum Strippen in Luft und mit einer Leitung (12) zum Abführen des Fermentstionsgases verbunden ist, welche über einen Stutzen (13) an eine Oxydationssäule (7) angeschlossen ist;
- eine Säule (4) zur Extraktion von H₂S durch Strippen in Luft, wobei diese Säule an ihrem oberen Teil die Leitung (10) zum Einbringen der aus der Fermentiereinrichtung (3) abfließenden wäßrigen Lösung und den Stutzen (13) zum Abführen des H₂S im gasförmigen Zustand und an ihrem unteren Teil den mit der Säule (1) verbundenen Stutzen (5) zum Zurückgewinnen aufweist;
- eine Säule (7) zur Umwandlung von H₂S in festen S durch Oxydation unter Anwesenheit von Eisen-Chelat, wobei diese Säule (7) an ihrem unteren Teil einen Stutzen (13) zum Einbringen des H₂S im gasförmigen Zustand und eine Leitung (17) zum Abführen der Mischung des in dem Chelat in Suspension vorliegenden festen Schwefels und an ihrem oberen Teil eine Leitung (15) zum Einbringen des Eisen-Chelats und eine Leitung zum Evakuieren des gereinigten Abgases aufweist;
- eine Dekantiereinrichtung (8) zur Trennung des molekularen festen Schwefels am Ausgang der Säule (7) zur Umwandlung des H₂S in S, wobei diese Dekantiereinrichtung an ihrem oberen Teil die von der Säule (7) kommende Leitung (17) und eine an die Säule (7) angeschlossene Leitung (15) zur Zurückgewinnung des Eisen-Chelats aus der Dekantiereinrichtung in diese Säule (7) und an ihrem oberen Teil eine Leitung (18) zur Evakuierung des Schwefels aufweist, und
- einen Wärmetauscher (22), welcher zum Kühlen der Abgase bis in die Nähe der Umgebungstemperatur geeignet ist, bevor diese in die Absorptionssäule (1) eingebracht werden, wobei dieser Tauscher stromauf von dieser letzteren angebracht ist.

9. Einrichtung zur Reinigung von Schwefeldioxid und Stickoxide enthaltenden Abgasen, **dadurch gekennzeichnet, daß** sie folgende Kombination enthält:
- eine Säule (1) zur Absorption des in den Abgasen enthaltenen SO₂ und der Stickoxide, um das SO₂ und die Stickoxide durch Einbringen in eine wäßrige Lösung mit geeigneter Basizität einerseits in Sulfat und Sulfit bzw. andererseits in Nitrat und Nitrit umzuwandeln, wobei diese Säule (1) an ihrem unteren Teil einen Stutzen zur Einbringung der Abgase und eine an eine entsprechende Fermentiereinrichtung (2, 3) angeschlossene Leitung (20) zum Ableiten der in dieser Säule gebildeten Sulfat- und Sulfit- bzw. Nitrat- und Nitritlösungen aufweist und diese Leitung (20) und an ihrem oberen Teil einen Stutzen (5) zum Einbringen des zurückgewonnenen flüssigen Mediums zur basischen Absorption und einen Stutzen (21) zur Evakuierung des gereinigten Abgases aus dieser Säule (1) aufweist;
- eine Fermentiereinrichtung (3) zur Umwandlung des in der genannten Absorptionssäule (1) gebildeten Sulfats und Sulfits mittels sulfatreduzierender Fermentierung in H₂S, wobei diese Fermentiereinrichtung an ihrem unteren Teil den Stutzen (20) zum Einbringen von Sulfaten und Sulfiten und an ihrem oberen Teil eine Leitung (10) zum Ableiten der von dieser Fermtentiereinrichtung (3) abfließenden wäßrigen Lösung aufweist, die mit einer Säule (4) zum Strippen in Luft und mit einer Leitung (12) zum Abführen des Fermentationsgases verbunden ist, welche über einen Stutzen (13) an eine Oxydationssäule (7) angeschlossen ist;
- eine Säule (4) zur Extraktion von H₂S durch Strippen in Luft, wobei diese Säule an ihrem oberen Teil die Leitung (10) zum Einbringen der aus der Fermentiereinrichtung (3) abfließenden wäßrigen Lösung und den mit der Säule (7) verbundenen Stutzen (13) zum Abführen des gasförmigen H₂S und an ihrem unteren Teil den mit der Säule (1) verbundenen Stutzen (5) zum Zurückgewinnen aufweist;
- eine Säule (7) zur Umwandlung von H₂S in festem S mittels Oxydation unter Anwesenheit von Eisen-Chelat, wobei diese Säule (7) an ihrem unteren Teil einen Stutzen (13) zum Einbringen des H₂S im gasförmigen Zustand und eine Leitung (17) zum Abführen der Mischung des in dem Chelat in Suspension vorliegenden festen Schwefels und an ihrem oberen Teil eine Leitung (15) zum Einbringen des Eisen-Chelats und eine Leitung zum Evakuieren des gereinigten Abgases aufweist;
- eine zweite Fermentiereinrichtung (2) zum Umwandeln des in der Absorptionssäule (1) gebildeten Nitrits und Nitrats mittels Fermentation unter Anwesenheit von Denitrifikationsbakterien zu molekularem Stickstoff, wobei diese Fermentationseinrichtung an ihrem unteren Teil den Stutzen (20) zum Einbringen von Nitraten und Nitriten und an ihrem oberen Teil eine Leitung (9) zur Evakuierung des molekularen Stickstoffes aufweist;
- eine Dekantiereinrichtung (8) zur Trennung des festen molekularen S am Ausgang der Säule (7) zur Umwandlung des H₂S in S, wobei diese Dekantiereinrichtung an ihrem oberen Teil die von der Säule (7) kommende Leitung (17) und eine an die Säule (7) angeschlossene Leitung (15) zur Zurückgewinnung des Eisen-Chelats aus der Dekantiereinrichtung in diese Säule (7) und an ihrem oberen Teil eine Leitung (18) zur Evakuierung des Schwefels aufweist, und
- einen Wärmetauscher (22), welcher zur Sicherstellung der Kühlung der Abgase in die Nähe der Umgebungstemperatur geeignet ist, bevor diese in die Absorptionssäule (1) eingebracht werden, wobei dieser Tauscher stromauf von dieser letzteren angebracht ist.

10. Einrichtung nach Anspruch 8 oder 9, **dadurch gekennzeichnet, daß** die Fermentiereinrichtung(en) jene ist (sind), welche nach dem Prinzip einer Wirbelschicht funktioniert (funktionieren).

11. Einrichtung nach einem der Ansprüche 8 bis 10, **dadurch gekennzeichnet, daß** die Säule (7) zur Umwandlung von H₂S in festem S ein Flüssigkeits-/Gasreaktor des Typs ist, der eine Mehrzahl von Platten (14a) aufweist, welche mit einer Vielzahl von Löchern sehr geringen Durchmessers versehen sind, bezüglich der Vertikalen unter einem Winkel von 45 bis 60° geneigt und entlang der gesamten Höhe der Säule übereinander in Form eines Zickzack angeordnet sind.

12. Einrichtung nach einem der Ansprüche 8 bis 11, **dadurch gekennzeichnet, daß** die Säule (4) zur Extraktion des H₂S durch Strippen aus der flüssigen Phase in Luft eine Mehrzahl von Platten (14b) aufweist, welche mit einer Vielzahl von Löchern sehr geringen Durchmessers versehen sind, bezüglich der Vertikalen unter einem Winkel von 45 bis 60° geneigt und entlang der gesamten Höhe der Säule übereinander in Form eines Zickzack angeordnet sind.

13. Einrichtung nach einem der Ansprüche 9 bis 12 zur Verwendung für die Reinigung von Abgasen, die zugleich SO₂ und NOₓ enthalten, **dadurch gekennzeichnet, daß** die Fermentiereinrichtung (2) zur Reduktion von Stickoxiden und die Fermentiereinrichtung (3) zur Reduktion von SO₂ zu H₂S in Serie mit Rückzirkulationsschleifen (20) für die Lösung in jeder Fermentierungseinrichtung (2,3) angeordnet sind, wobei die Gasauslässe (9, 12) parallel angeordnet sind.
